# EUROPEAN PATENT APPLICATION

(11) **EP 2 067 525 A1**
(43) Date of publication of application: **10.06.2009**
(21) Application number: 07023482.8
(22) Date of filing: 04.12.2007
(51) Int. Cl.: B01J 19/00, G01N 27/12, C08K 3/00, B82B 3/00

(54) **A method of preparing a nanoparticle film having metal ions incorporated**

(71) Applicant: Sony Corporation, Minato-ku Tokyo 108-0075 (JP)
(72) Inventor: Joseph, Yvonne, 70327 Stuttgart (DE)
(74) Representative: Appelt, Christian W.

(57) **Abstract**

The present invention relates to a method of preparing a nanoparticle film having metal ions incorporated and to a film prepared by said method. The invention furthermore relates to uses of such a film.

## Description

The present invention relates to a method of preparing a nanoparticle film having metal ions incorporated and to a film prepared by said method. The invention furthermore relates to uses of such a film.

Nanoparticle films are useful in many applications, such as molecular electronic devices, for example chemical sensors. In order to be stable, nanoparticles in such films can be capped or interlinked by capping ligand molecules or linker molecules. One method of forming such nanoparticle films which are interlinked with molecules is the layer-by-layer self-assembly (EP 1 022 560). Here, substrates are alternately immersed into nanoparticle solutions/dispersions and solutions of organic molecules, such as dithiols (Joseph, et al., J. Phys. Chem. B 2003, 107,7406) and bis(dithiocarbamates) (Wessels et al., J. Am. Chem. Soc., 2004, 126, 3349). This results in an assembly of the material in a nanoparticle film wherein the nanoparticles are interlinked. Whilst the nanoparticles in the film are most important for the conductivity and the high surface to volume ratio of the materials, the organic molecules functioning as linkers or ligand molecules determine the physical and chemical properties of the materials (EP 1 215 485). Therefore, a broad variety of materials with tuned properties can be achieved by choosing appropriate linker or ligand molecules. Commonly, these organic linker or ligand molecules have to be synthesized and purified before hand. Zhao et al. (J. Am. Chem. Soc. 2005; 127; 7328) describe the self-assembly of a dithiocarbamate monolayer on gold surfaces. In this publication, the samples were prepared from a solution containing commercially available secondary amines and carbon disulfide which undergo a reaction to form in-situ dithiocarbamate molecules. This publication is not concerned with the formation of nanoparticulate films.

The layer-by-layer self-assembly process referred to above has many advantages. The main advantage is the reproducibility of the preparation and the structural control of the film.

Nanoparticulate films are especially suited to be used as or in a chemi-resistor device, which means such films may be used in chemical sensor applications. However, for advanced sensor applications, there is a need not only for highly selective, but also highly sensitive materials. One possibility to achieve high sensitivity has been to use linker or ligand molecules or nanoparticles with special adsorption sites for an analyte, such adsorption sites being incorporated into the film.

Consequently, there is a need in the art for a method to incorporate metal ions as possible adsorption sites into nanoparticle films, e.g. nanoparticle films interlinked with organic molecules or encapsulated by organic ligands. Consequently, it was an object of the present invention to provide for a method to incorporate metal ions into a nanoparticle film, which method is easy to perform and does not require complicated chemistry. Furthermore, it was an object of the present invention to provide for a method for the incorporation of metal ions into nanoparticle films wherein the metal ions are not involved in the actual film formation during the process of the deposition of the nanoparticles. Furthermore, it was an object of the present invention to provide for a method of incorporation of metal ions into a nanoparticle film, whereby the metal ions are not blocked by complete adsorption through the linker and therefore are available for increasing the sensitivity of such nanoparticle film or of the sensor into which such film is incorporated. Furthermore, it was an object of the present invention to provide a method for building up of material arrays which differ in the type of incorporated metal.

All these objects are solved by a method of preparing a nanoparticle film having metal ions incorporated, on a substrate, comprising the steps:
a) providing a substrate,
b) forming a film of nanoparticles on said substrate,
c) exposing said film of nanoparticles or a region thereof, to a solution of metal ions.

Preferably, said nanoparticles in said film are linked by bi-or polyfunctional organic linkers, or said nanoparticles are encapsulated by organic ligands, which organic linkers or ligands do not comprise metal ions.

Preferably, step b) is performed by depositing, alternately, on said substrate, a dispersion of nanoparticles and a composition comprising said organic linkers or organic ligands, thereby obtaining a film of nanoparticles linked by said organic linkers or encapsulated by said organic ligands, and, optionally, repeating said alternating deposition once or several times.

In another embodiment, step b) is performed by a process selected from spray coating, dip coating, and co-precipitation.

In one embodiment, said organic linkers are polyfunctional linkers.

In one embodiment, in step c) said solution of metal ions comprises a solvent and said metal ions, and said solvent is selected such that it does not dissolve said organic linkers, if present, upon exposing said film of nanoparticles linked by said organic linkers, to said solution in step c), wherein, preferably, said organic linkers are non-polar, and said solvent is polar.

In one embodiment, said organic linkers are selected from the group comprising thiols such as C₅-C₃₀-alkane dithiols, such as 1,12-dodecanedithiol, or amines or dithiocarbamates such as 1,4,10,13-tetraoxa-7,16-bisdithiocarbamate-cyclo-octadecane or thioctic acids or isocyanates.

In one embodiment, said solvent is selected from the group comprising water, alcohols, and ketones, e.g. C₁-C₆ alcohols, preferably 1-propanol, 2-propanol, methanol, ethanol or butanol, or acetone or methyl ethyl ketone.

In one embodiment, said organic linkers are 1, 12-dodecanethiol, and said solvent is selected from water, C₁C₆-alcohols, such as methanol, ethanol, 1-propanol, 2-propanol or butanol.

In one embodiment, said organic linkers are 1, 4, 10, 13-tetraoxa-7,16-bisdithiocarbamate-cyclo-octadecane, and said solvent is selected from C₁-C₆-alcohols, such as methanol, ethanol, 1-propanol, 2-propanol or butanol.

In one embodiment, said organic linkers are polar and said solvent is non-polar.

In one embodiment, in step c), said film or said region thereof is exposed to said solution of metal ions for a defined period of time in the range of from 1s to several days, preferably 1 min to 24 h, more preferably 10 min to 5 h.

In one embodiment, said metal ions are selected from the group comprising Mg²⁺, Ca²⁺, Pb^{2+/4+}, Mn^{2+/3+/4+/6+/7+}, Co^{2+/3+}, Fe^{2+/3+}, Cu^{+/2+}, Ag⁺, Zn²⁺, Cd²⁺, Hg^{+/2+}, Cr^{2+/3+/6+}, Ce^{3+/4+}, Pd^{2+/4+}, Ph^{2+/4+6+}, Cu^{+/2+}, Fe^{2+/3+}, Sn⁴⁺, Au^{+/2+/3+/5+}, Ni²⁺, Rh^{+/2+/3+/4+}, Ru^{2+/3+/4+/6+/8+}, Mo^{2+/3+/4+/5+/6+}

In one embodiment, step b) is repeated once to 20 times.

In one embodiment, step b) is performed by immersing said substrate, alternately, in said dispersion of nanoparticles and in said composition comprising said organic linkers.

In one embodiment, said metal ions, upon exposing said film of nanoparticles to a solution of said metal ions, react with said film and become oxidized or reduced, preferably to a metallic state.

In one embodiment, said film of nanoparticles linked by said organic linkers or encapsulated by organic ligands has two or more regions, and, in step c), each of said two or more regions is exposed to said solution of metal ions, thereby forming an array of regions of nanoparticle film, each of said regions having metal ions incorporated, and wherein, more preferably, said regions having metal ions incorporated are separated from each other by other regions which, in step c) have not been exposed to said solution of metal ions and which therefore do not have metal ions incorporated.

In one embodiment, said solution of metal ions only contains one type of metal ions, said type of metal ions being characterized by the elemental nature of the respective metal of said metal ions.

In one embodiment, said film of nanoparticles linked by said organic linkers or encapsulated by organic ligands has two or more regions, and, in step c) each of said two or more regions is exposed to a different solution of metal ions, said solutions of metal ions being different to each other by the respective type of metal ions dissolved in each solution, said type of metal ions being characterized by the elemental nature of the respective metal of said metal ions.

In one embodiment, said solution of metal ions contains a combination of types of metal ions, said types of metal ions being characterized by the elemental nature of the respective metal of said metal ions, wherein, preferably, said film of nanoparticles linked by said organic linkers or encapsulated by organic ligands has two or more regions, and, in step c), each of said regions is exposed to a different solution of metal ions, said solutions of metal ions being different to each other by the respective combination of types of metal ions dissolved in each solution.

In one embodiment, said two or more regions are spaced apart, preferably regularly spaced apart, and more preferably, are separated from each other by further regions not having metal ions incorporated.

The objects of the present invention are also solved by a film of nanoparticles on a substrate linked by organic linkers or encapsulated by organic ligands and having metal ions incorporated, produced by the method according to the present invention.

Preferably, the film according to the present invention has metal ions incorporated in two or more regions, wherein said metal ions incorporated in said two or more regions are of the same type, said film having being produced by the method in which said solution of metal ions only contains one type of metal ions.

In another embodiment, the film according to the present invention has metal ions incorporated in two or more regions, wherein said metal ions incorporated in one region are of a different type from said metal ions incorporated in another region, each type of metal ions being characterized by the elemental nature of the respective metal of said metal ions, said film having been produced by the method in which each of said two or more regions are exposed to a different solution of metal ions.

Preferably, the film according to the present invention has a combination of types of metal ions incorporated in two or more regions, wherein said combination of types of metal ions incorporated in one region is different from said combination of types of metal ions incorporated in another region, each type of metal ions being characterized by the elemental nature of the respective metal of said metal ions, said film having been produced by the method in which said solution of metal ions contains a combination of types of metal ions.

Preferably, said metal ions incorporated in said film are not complexed in coordination complexes before incorporation and are not coordinated by carboxylate groups of mercaptoundecanoic acid.

The objects of the present invention are also solved by a sensor device comprising a film according to the present invention.

The objects of the present invention are also solved by the use of a film as defined above or of a sensor device as defined above for detecting the presence or absence of an analyte, preferably a gaseous or volatile or liquid analyte, more preferably an amine containing compound or a thiol containing compound.

As used herein, the term "organic linker" is meant to refer to an organic molecule in which there are at least two independent sites that enable the binding of said linker molecule to nanoparticles and/or to the substrate. Preferably, such linker is "polyfunctional", which means that it has more than one site, preferably two or more sites, that enable(s) such binding. "Functionality" in this context, therefore refers to the capability of binding to nanoparticles and/or the substrate.
As used herein, the term "organic ligand" is meant to refer to an organic molecule in which there is one site that enables the binding of said ligand molecule to nanoparticles resulting in capped nanoparticles.
A linker or ligand is referred herein to as "non-polar", if an electrical dipole moment is absent in the linker molecule, whereas a "polar" linker or ligand has an electric dipole moment. The polarity of a linker or ligand molecule is indicated by the solubility in polar or non polar solvents. More specifically, the term "non-polar", as used herein in the context of an organic linker or ligand is meant to refer to an organic linker or ligand, as long as it cannot be dissolved by polar solvents, such as water.
The organic linker is preferably selected from the group comprising thiols such as C₅-C₃₀-alkane dithiols, such as 1,12-dodecanedithiol, or amines or dithiocarbamates such as 1,4,10,13-tetraoxa-7,16-bisdithiocarbamate-cyclo-octadecane of thioctic acids or isocyanates.
The organic ligand is preferably selected from the group comprising thiols such as C₅-C₃₀-alkane thiols, or amines or dithiocarbamates such as or thioctic acids or isocyanates.

The term "nanoparticle", as used herein, is meant to refer to particles the average dimensions of which are < 1 µm, preferably ≤ 500 nm, more preferably ≤ 300 nm, and most preferably ≤ 100 nm.

Preferably, the metal ions to be incorporated by the method according to the present invention are selected from the main group metals, the transition metals and/or the rare earth metals. Particular examples are Mg²⁺, Ca²⁺, Pb^{2+/4+}, Mn^{2+/3+/4+/6+/7+}, Co^{2+/3+}, Fe^{2+/3+}, Cu^{+/2+}, Ag⁺, Zn²⁺ Cd²⁺, Hg^{+/2+}, Cr^{2+/3+/6+}, Ce^{3+/4+}, Pd^{2+/4+}, Pt^{2+/4+6+}, Cu^{+/2+}, Fe²⁺/³⁺, Sn⁴⁺, Au^{+/2+/3+/5+}, Ni²⁺, Rh^{+/2+/3+/4+}, Ru^{2+/3+/4+/6+/8+}, Mo^{2+/3+/4+/5+/6+}

Sometimes in this application, reference is made to a solution of metal ions as "containing only one type of metal ions". This type of metal ions is further specified herein as "being characterized by the elemental nature of the respective metal of said metal ions". This is meant to mean that an Fe²⁺-ion is of a different type than an Ag⁺-ion, whereas an Fe²⁺-ion is of the same type as an Fe³⁺-ion, because both are of the same elemental nature (= Fe) with regard to the metal.

The present inventors have surprisingly found that it is possible to incorporate metal ions into a nanoparticle film, e.g. a nanoparticle film in which the nanoparticles are linked by an organic linker, simply by exposing such film of nanoparticles to a solution of metal ions. As a result of such exposure, it appears that the metal ions become incorporated into said film of nanoparticles. During the process of incorporation the metal ions may partly or completely react with the nanoparticular film and thus become themselves oxidized or reduced (up to metallic state). However, it has to be noted that the metal ions are only added and incorporated into said film of nanoparticles, once this film has already been formed. Hence, the metal ions do not appear to take part in the linking between various nanoparticles within said film but are only added to such film after its formation. It has to be noted too, that the metal ions are not part of organic coordination complexes before incorporation into the film.

The person skilled in the art knows very well how to form a film of nanoparticles which are linked by an organic linker or encapsulated by organic ligands. The currently preferred method of preparing such a film is by means of the so-called layer-by-layer-self-assembly. Other methods in which the resultant film does not necessarily have linkers or ligands present are e.g. co-precipitation , drop coating, or spray coating. The main advantage of a layer-by-layer-self-assembly-process is the reproducibility of the preparation and the structural control of the film. Optionally, and depending on the substrate, the substrate may have to be functionalized in order to provide linking units on the surface of the substrate to serve as points of adhesion for the nanoparticles that are subsequently deposited on such functionalized substrate surface.

Nanoparticles in accordance with the present invention may be metal nanoparticles or semiconductor nanoparticles. Preferred materials for metal nanoparticles are Au, Ag, Pt, Pd, Cu, Co, Ni, Cr, Mu, Zr, Nb and Fe. It is also possible to use nanoparticles comprising combinations, e.g. alloys, of these metals.

Furthermore, the nanoparticles may also be semiconductor nanoparticles, e.g. II/VI semiconductors, such as CdS, CdSe, CdTe, ZnO, ZnS, ZnSe, ZnTe, HgS, HgSe, HgTe, or III/V semiconductors, such as GaAs, InAsInP, or others such as PbS, Cd₃P₂, TiO₂, V₂O₅, SnO and other transition metal oxides, or combinations of these materials, including core-shell structures, e.g. CdS/CdSe or CdSe/ZnS. Moreover, also combinations of metals, semiconductors and/or insulators may be used as nanoparticles. As insulator materials, SiO₂, Al₂O₃ or MgO may be used. Nanoparticles solely consisting of insulator materials might also be used for preparing a nanoparticle film in accordance with the present invention, with the required conductivity then being solely provided by the organic linker or organic ligand molecules.

The nanoparticle films having metal ions incorporated in accordance with the present invention have a thickness in the range of from 5 nm to 100 nm, preferably from 15 to 50 nm, more preferably from 20 nm to 40 nm, and even more preferably from 25 nm to 35 nm, and most preferably around 30 nm.

The method according to the present invention is easy to perform and allows an efficient incorporation of metal ions into the nanoparticle films. No complicated synthesis of metal complexes is required beforehand, and the metal ions are not used for the actual film formation, because they are only added after the film of nanoparticles linked by organic linkers has been formed on the substrate. Furthermore, because the method is so easy to perform, it is also possible to expose different regions of a film of nanoparticles to different metal ion solutions, which regions may be spaced regularly apart. Consequently, the production of arrays is possible, such arrays comprising regions each of which has metal ions incorporated. The metal ions incorporated into these regions may be of the same type or of a different type or may be mixtures of various metal ions. In yet a further embodiment, in different regions, different compositions of metal ions may have become incorporated. Therefore, the present invention allows for a very versatile production of nanoparticle films, especially those films wherein the nanoparticles are linked by organic linker molecules or encapsulated by organic ligands, into which films metal ions have become incorporated.

In one embodiment of the approach chosen by the present inventors, first the film of nanoparticles, e.g. of nanoparticles being linked by organic linkers or encapsulated by organic ligands is formed on a substrate, and only thereafter, the film thus formed is exposed to a metal ion solution, such as a metal ion salt solution, containing one or more kinds of metal salts, to incorporate the metal ions into the film. With regard to the choice of solvents for the metal solution, the condition must be fulfilled that the metal ion must be soluble in the solvent, which effectively means that polar solvents, such as water or C₁-C₃ alcohols, are preferred. On the other hand, the actual film of nanoparticles linked by organic linker molecules must be insoluble within the same solvent, such that the exposure of the film to the solution of metal ions does not destroy the nanoparticular structure of the film or the organic linkers or ligands. The optimal solvent for the process depends actually on the respective organic linker or ligands that are used in the film. For non-polar linkers or ligands in the nanoparticle film, polar solvents are preferred and vice versa. However, this also means that in nanoparticle films that have been assembled with non-polar linkers or ligands, metal ions can be incorporated much easier because of the possibility of using polar solvents that are capable of dissolving rather large amounts of metal ions, for example in the form of a metal salt.

As already outlined above, it is also clear that it is possible that only regions of such a nanoparticular film may be exposed to a metal salt solution by exposing only parts, i.e. such regions of the film, to the solution or different solutions. This may be achieved by using compartments, for example in the form of droplets. Such droplets may be very easily applied to the nanoparticular film using standard laboratory equipment. The use of droplets of metal salt solutions allows the easy formation of an array of various regions having the same or different metal ions incorporated on one substrate.

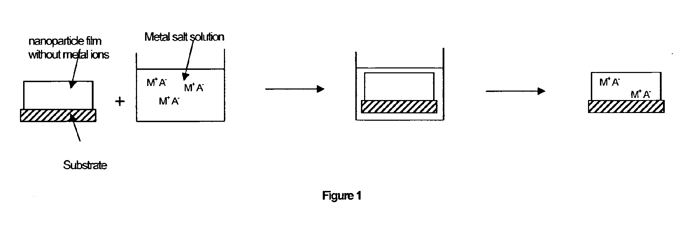

Moreover, reference is made to the figures wherein
Figure 1 shows an embodiment of metal ion incorporation by immersing the film of nanoparticles into a metal ion salt solution, M⁺ denoting a metal cation and A⁻ denoting an anion,

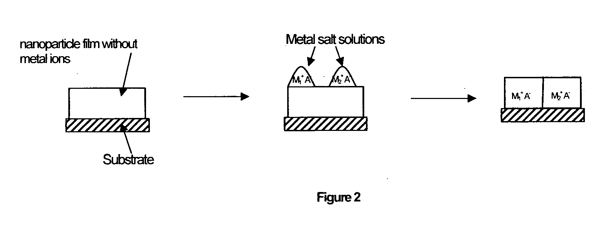

Figure 2 shows an embodiment of metal ion incorporation by using droplets of different metal salt solutions (M₁A and M₂A) resulting in an array of different materials.
Figure 3 shows SEM images of AuDT (gold nanoparticles interlinked with 1,12-dodecanedithiol) films immersed in 2-propanol (left) and 132 mg copperperchlorate dissolved in 5 ml 2-propanol (right), and
Figure 4 shows Cu 2p X-ray photoelectron spectra of AuDT films immersed in 2-propanol (left) and 132 mg copperperchlorate dissolved in 5 ml 2-propanol (right),
Figure 5 shows response traces of Co doped AuDAC towards 100 ppb 1-Butylamine compared with undoped AuDAC,
Figure 6 shows response traces of Cu doped AuDT towards 10 ppb cadaverine compared with undoped AuDT,
Figure 7 shows response traces of Hg dopedAuDT towards 20 ppb methylmercaptane compared with undoped AuDT,
Figure 8 shows response traces of differently doped AuDAC towards 3030ppm 1-Butylamine compared with undoped AuDAC,
Figure 9 shows response traces of differently doped AuDT towards 20 ppb cadaverine, and
Figure 10 shows response traces of differently doped AuDT towards 20 ppb methylmercaptane.
In the following, reference is made to the examples which are given to illustrate, not to limit the present invention.

### Examples

### Example 1:

### a) Cu in AuDT film

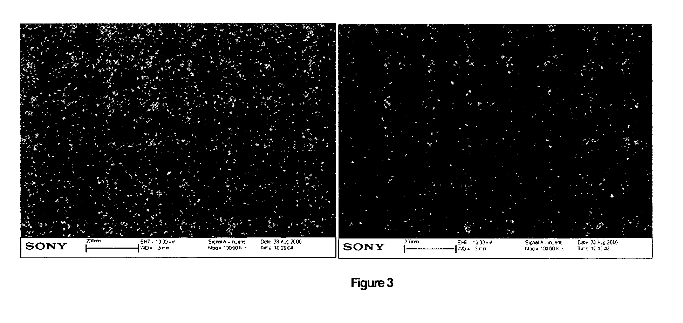

First a nanoparticular film comprising Au-nanoparticles and 1,12-dodecanedithiol was prepared by layer-by -layer self-assembly, similar as described in [EP 1 022 560 and EP 1 215 485]. To incorporate Cu ions in this AuDT film the film was immersed for one hour into a solution from 132mg copperperchlorate in 5ml 2-propanol.
In this example also water or other alcohols like 1-propanol, ethanol or methanol can be used as a solvent for metal ion incorporation instead of 2-propanol showing comparable results (see below).
SEM images (Fig. 3) showed that the film morphology is not different to a film without Cu in the immersion solution and that the particle structure of the film is conserved during the metal ion treatment.

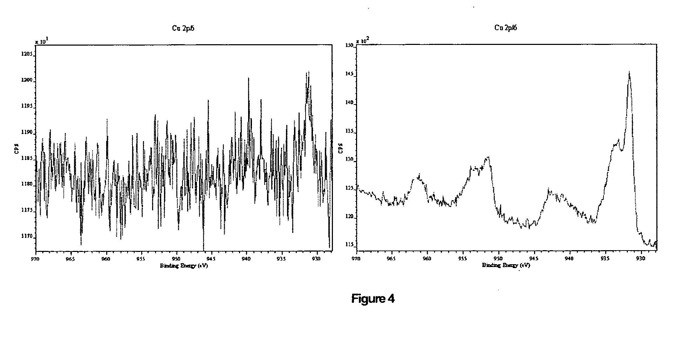

XPS measurements proved that there is definitely copper in different oxidation states (formed by reaction with the nanoparticular film) in the film as shown in the Cu 2p spectra given in figure 4

### b) Cu in AuDAC

First a nanoparticular film comprising Au-nanoparticles and 1,4,10,13-tetraoxa-7,16-bisdithiocarbamate-cyclo-octadecane (DAC) (prepared in-situ from 1,4,10,13-tetraoxa-7,16-diaza-cyclo-octadecane, Carbondisulphide and Trieethylamine) was formed by layer-by -layer self-assembly, similar as described in EP 06 006 881. To incorporate Cu ions in this AuDAC film the film was immersed for one hour into a solution from 132mg copperperchlorate in 5ml 2-propanol. Here the use of water as solvent for the metal ion incorporation is less preferred because it may, to a certain extent, dissolve the film, because of the higher solubility of the DAC-linker in polar solvents.

The film shows similar SEM and XPS results as AuDT (see a)).

Here the metal ion is assumed to bind not only to unlinked bis-dithiocarbamate groups but to the linker molecule itself because DAC is a crownether derivative. This chemical class is known to bind metals in their ring system which is often used for phase transfer catalysis applications. This concept can be transferred to similar organic compounds.

### c) Arrays

Nanoparticular films comprising Au-nanoparticles and 1,12-dodecanedithiol were prepared by layer-by-layer self-assembly, similar as described in a). To incorporate different ions in the AuDT films they were immersed for one hour into solutions from
1. 134,1mg Cu(ClO₄)₂ x6H₂O in 5,08mL Propanol-2
2. 99,6mg Fe(ClO₄)₂ xnH₂O in 5,22mL Propanol-2
3. 147,6mg Cr(NO₃)₃ x9H₂O in 5,27mL Propanol-2
4. 150,3mg Hg(ClO₄)₂ xnH₂O in 5,14mL Methanol
5. 12,1mg PtCl₄ in 5,13mL Methanol
6. 61,7mg AgNO₃ in 1mL Water and 4.18mL 2-Propanol

All XP spectra proved the incorporation of the respective metals.

### Example 2:

### Enhanced sensitivity for 100 ppb 1-butylamine detection by incorporation of Co ions in AuDAC

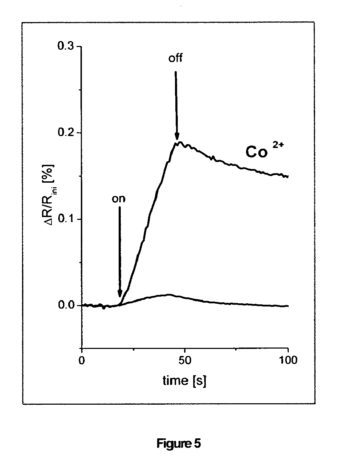

A nanoparticular film was prepared by layer-by layer growth as described in EP1022560. Gold Nanoparticles were used as metal component whereas 1,4,10,13-tetraoxa-7,16-diaza-cyclooctadecane was reacted in-situ with CS₂ and Triethylamine in Toluene to the respective bisdithiocarbamate (DAC) as described in EP06006881 which was used as linker solution. Afterwards the prepared Films were immersed in Co(NO₃)₂*6H₂O solved in isopropanol. Figure 5 shows the responses towards 100 ppb 1-butylamine of the film compared with a reference sensor immersed only in pure isopropanol. The response of the metal doped film is much higher than those of the undoped material.

### Example 3:

### Enhanced sensitivity for 10 ppb cadaverine detection by incorporation of Cu ions in AuDT

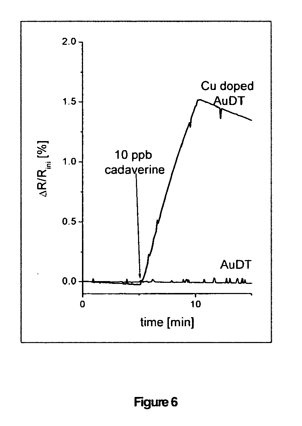

A nanoparticular film was prepared by layer-by layer growth as described in EP 1022560. Gold Nanoparticles were used as metal component whereas 1,12-Dodecanedithiol was used as linker in toluene solution. Afterwards the prepared Films were immersed in Cu(ClO₄)₂*6H₂O solved in isopropanol. Figure 6 shows the responses towards 10 ppb cadaverine of the film compared with a reference sensor immersed only in pure isopropanol. The response of the metal doped film is much higher than those of the undoped material.

### Example 4:

### Enhanced sensitivity for 20 ppb methylmercaptane detection by incorporation of Hg ions

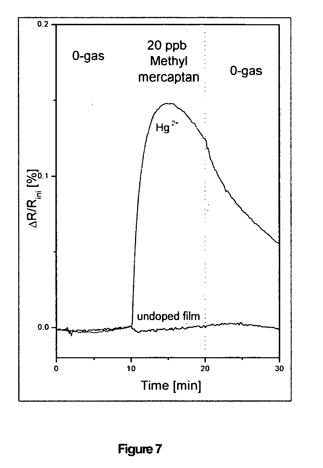

A nanoparticular film was prepared by layer-by layer growth as described in EP1022560. Gold Nanoparticles were used as metal component whereas 1,12-Dodecanedithiol was used as linker in toluene solution. Afterwards the prepared Films were immersed in Hg(ClO₄)₂ solved in methanol. Figure 7 shows the responses towards 20 ppb Methylmercaptane of the film compared with a reference sensor immersed only in pure methanol. The response of the metal doped film is much higher than those of the undoped material.

### Example 5:

### 1-Butylamine detection with AuDAC doped with different metals

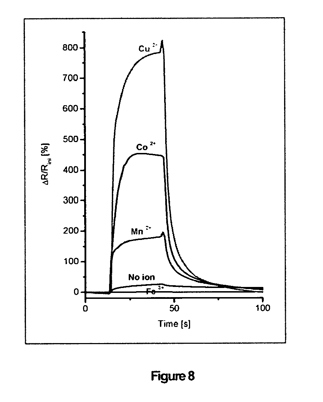

For building up a sensor array 5 sensor coatings were assembled (compare example 1) and 4 of them immersed in different metal ion solutions in isopropanol. One sensor was treated with pure isopropanol as a reference. Figure 8 shows the sensor responses towards 3030 ppm 1-butylamine. It can be clearly seen that the sensor response varies strongly for the sensors treated with different metal ions. The highest response was observed for Cu doped films, whrereas the response of the Fe doped film is even less that those of the undoped material.

### Example 6:

### Cadaverine detection with AuDT doped with different metals

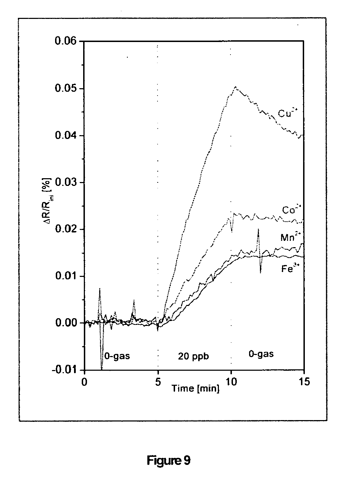

For building up a sensor array 4 AuDT sensor coatings were assembled (compare example 2) and immersed in different metal ion solutions in methanol. Figure 9 shows the sensor responses towards 20ppb cadaverine. It can be clearly seen that the sensor response varies strongly for the sensors treated with different metal ions. The highest response was observed for Cu doped films.

### Example 7:

### Methylmercaptane detection with AuDT doped with different metals

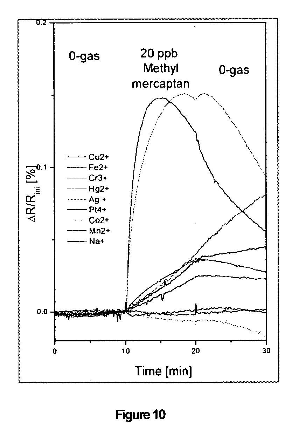

For building up a sensor array 9 AuDT sensor coatings were assembled (compare example 2) and immersed in different metal ion solutions in methanol. Figure 10 shows the sensor responses towards 20 ppb methylmercaptane. It can be clearly seen that the sensor response varies strongly for the sensors treated with different metal ions. The highest responses were observed for Ag and Hg doped films.

From examples 2-7, it can be seen that nanoparticulate films linked by organic linkers and having metal ions incorporated into said films show a higher sensitivity to analytes in comparison to such films which do not have metal ions incorporated.

Consequently, such films having metal ions incorporated are particularly useful as chemical sensors, preferably for analytes in the gas phase.

The features of the present invention disclosed in the specification, the claims and/or in the accompanying drawings, may, both separately, and in any combination thereof, be material for realising the invention in various forms thereof.

## Claims

1. A method of preparing a nanoparticle film having metal ions incorporated, on a substrate, comprising the steps:
a) providing a substrate,
b) forming a film of nanoparticles on said substrate,
c) exposing said film of nanoparticles or a region thereof, to a solution of metal ions.

2. The method according to claim 1, wherein said nanoparticles in said film are linked by bi-or polyfunctional organic linkers, or said nanoparticles are encapsulated by organic ligands, which organic linkers or ligands do not comprise metal ions.

3. The method according to claim 2, wherein step b) is performed by depositing, alternately, on said substrate, a dispersion of nanoparticles and a composition comprising said organic linkers or organic ligands, thereby obtaining a film of nanoparticles linked by said organic linkers or encapsulated by said organic ligands, and, optionally, repeating said alternating deposition once or several times.

4. The method according to claim 1, wherein step b) is performed by a process selected from spray coating, dip coating, and co-precipitation.

5. The method according to any of claims 1-3, wherein said organic linkers are polyfunctional linkers.

6. The method according to any of the foregoing claims, wherein, in step c) said solution of metal ions comprises a solvent and said metal ions, and said solvent is selected such that it does not dissolve said organic linkers, if present, upon exposing said film of nanoparticles linked by said organic linkers, to said solution in step c).

7. The method according to claim 6, wherein said organic linkers are non-polar, and said solvent is polar.

8. The method according to any of claims 6-7, wherein said organic linkers are selected from the group comprising thiols such as C₅-C₃₀-alkane dithiols, such as 1,12-dodecanedithiol, or amines or dithiocarbamates such as 1,4,10,13-tetraoxa-7,16-bisdithiocarbamate-cyclo-octadecane or thioctic acids or isocyanates.

9. The method according to any of claims 6-8, wherein said solvent is selected from the group comprising water, alcohols, and ketones, e.g. C₁-C₆ alcohols, preferably 1-propanol, 2-propanol, methanol, ethanol or butanol, or acetone or methyl ethyl ketone.

10. The method according to any of claims 6-9, wherein said organic linkers are 1, 12-dodecanethiol, and said solvent is selected from water, C₁-C₆-alcohols, such as methanol, ethanol, 1-propanol, 2-propanol or butanol.

11. The method according any of claims 6-9, wherein said organic linkers are 1, 4, 10, 13-tetraoxa-7,16-bisdithiocarbamate-cyclo-octadecane, and said solvent is selected from C₁-C₆-alcohols, such as methanol, ethanol, 1-propanol, 2-propanol or butanol.

12. The method according to claim 6, wherein said organic linkers are polar and said solvent is non-polar.

13. The method according to any of the foregoing claims, wherein, in step c), said film or said region thereof is exposed to said solution of metal ions for a defined period of time in the range of from 1s to several days, preferably 1 min to 24 h, more preferably 10 min to 5 h.

14. The method according to any of the foregoing claims, wherein said metal ions are selected from the group comprising Mg²⁺, Ca²⁺, Pb^{2+/4+}, Mn^{2+/3+/4+/6+/7+}, Co^{2+/3+}, Fe^{2+/3+}, Cu^{+/2+}, Ag⁺, Zn²⁺, Cd²⁺, Hg^{+/2+}, Cr^{2+/3+/6+}, Ce^{3+/4+}, Pd^{2+/4+}, Pt^{2+/4+6+}, Cu^{+/2+}, Fe²⁺/³⁺, Sn⁴⁺, Au^{+/2+/3+/5+}, Ni²⁺, Rh^{+/2+/3+/4+}, Ru^{2+/3+/4+/6+/8+}, Mo^{2+/3+/4+/5+/6+}

15. The method according to any of claims 3, 5-14, wherein step b) is repeated once to 20 times.

16. The method according to any of claims 3, 5-15, wherein step b) is performed by immersing said substrate, alternately, in said dispersion of nanoparticles and in said composition comprising said organic linkers.

17. The method according to any of the foregoing claims, wherein said metal ions, upon exposing said film of nanoparticles to a solution of said metal ions, react with said film and become oxidized or reduced, preferably to a metallic state.

18. The method according to any of claims 2-17, wherein said film of nanoparticles linked by said organic linkers or encapsulated by organic ligands has two or more regions, and, in step c), each of said two or more regions is exposed to said solution of metal ions, thereby forming an array of regions of nanoparticle film, each of said regions having metal ions incorporated, and wherein, more preferably, said regions having metal ions incorporated are separated from each other by other regions which, in step c) have not been exposed to said solution of metal ions and which therefore do not have metal ions incorporated.

19. The method according to any of the foregoing claims, wherein said solution of metal ions only contains one type of metal ions, said type of metal ions being **characterized by** the elemental nature of the respective metal of said metal ions.

20. The method according to any of claims 1-18, wherein said film of nanoparticles linked by said organic linkers or encapsulated by organic ligands has two or more regions, and, in step c) each of said two or more regions is exposed to a different solution of metal ions, said solutions of metal ions being different to each other by the respective type of metal ions dissolved in each solution, said type of metal ions being **characterized by** the elemental nature of the respective metal of said metal ions.

21. The method according to any of claims 1-18, wherein said solution of metal ions contains a combination of types of metal ions, said types of metal ions being **characterized by** the elemental nature of the respective metal of said metal ions.

22. The method according to claim 21, wherein said film of nanoparticles linked by said organic linkers or encapsulated by organic ligands has two or more regions, and, in step c), each of said regions is exposed to a different solution of metal ions, said solutions of metal ions being different to each other by the respective combination of types of metal ions dissolved in each solution.

23. The method according to any of claims 18-22, wherein said two or more regions are spaced apart, preferably regularly spaced apart, and more preferably, are separated from each other by further regions not having metal ions incorporated.

24. A film of nanoparticles on a substrate linked by organic linkers or encapsulated by organic ligands and having metal ions incorporated, produced by the method according to any of claims 1-23.

25. The film according to claim 24, having metal ions incorporated in two or more regions, wherein said metal ions incorporated in said two or more regions are of the same type, said film having being produced by the method according to any of claims 18-19.

26. The film according to claim 24, having metal ions incorporated in two or more regions, wherein said metal ions incorporated in one region are of a different type from said metal ions incorporated in another region, each type of metal ions being **characterized by** the elemental nature of the respective metal of said metal ions, said film having been produced by the method according to claim 20.

27. The film according to claim 24, having a combination of types of metal ions incorporated in two or more regions, wherein said combination of types of metal ions incorporated in one region is different from said combination of types of metal ions incorporated in another region, each type of metal ions being **characterized by** the elemental nature of the respective metal of said metal ions, said film having been produced by the method according to any of claims 21-22.

28. The film according to any of claims 24-27, wherein said metal ions incorporated in said film are not complexed in coordination complexes before incorporation and are not coordinated by carboxylate groups of mercaptoundecanoic acid.

29. A sensor device comprising a film according to any of claims 24-28.

30. Use of a film as defined in any of claims 24-28 or of a sensor device as defined in claim 29 for detecting the presence or absence of an analyte, preferably a gaseous or volatile or liquid analyte, more preferably an amine containing compound or a thiol containing compound.
